# EUROPEAN PATENT APPLICATION

(11) **EP 1 916 796 A2**
(43) Date of publication of application: **30.04.2008**
(21) Application number: 07119426.0
(22) Date of filing: 26.10.2007
(51) Int. Cl.: H04L 1/18

(54) **Transmitter, receiver and communication method using automatic repeat request**

(30) Priority: 27.10.2006 JP 2006293351
(71) Applicant: Fujitsu Ltd., Kawasaki-shi, Kanagawa 211-8588 (JP)
(72) Inventor: Takahashi, Noriaki, Nakahara-ku, Kawasaki-shi Kanagawa 211-8588 (JP); Shinohara, Shigeru, Nakahara-ku, Kawasaki-shi Kanagawa 211-8588 (JP); Ohtsuki, Kazuya, Nakahara-ku, Kawasaki-shi Kanagawa 211-8588 (JP)
(74) Representative: Fenlon, Christine Lesley

(57) **Abstract**

A communication method includes re-transmitting, from a transmitter to a receiver, a packet or a plurality of packet segments formed by segmenting the packet, when the transmitter receives a re-transmission request from the receiver. The packet includes identification information and information indicating that the packet is not segmented. The packet segments include the identification information, information indicating that the packet is segmented, and information for assembling the packet segments.

## Description

### CROSS-REFERENCE TO RELATED APPLICATIONS

This application is based upon and claims the benefit of priority from the prior Japanese Patent Application No. 2006-293351, filed on October 27, 2006, the entire contents of which are incorporated herein by reference.

### BACKGROUND OF THE INVENTION

### 1. Field of the Invention

The present invention relates to a transmitter, a receiver, and a method for automatic repeat request control (ARQ) in communication.

### 2. Description of the Related Art

Under the 3rd generation partnership project (3GPP) to promote the standardization of 3G mobile systems, standardization work of 3G long term evolution (LTE) has been progressing. The 3G LTE mobile system enables data transmission by downlink at 100 Mbps.

In 3G LTE, the performance of ARQ on two layers has been agreed upon. Hybrid ARQ (HARQ) is performed on a media access layer (MAC), and outer-ARQ is performed on a higher layer, a radio link control (RLC) layer.

In the following description, data units input to the RLC layer are referred to as RLC service data units (SDU), data units handled in outer-ARQ are referred to as RLC protocol data units (PDU), and data units handled by the HARQ are referred to as MAC PDU.

HARQ is a technology to improve the efficiency of the resending of data by combining an error correction code and the ARQ. A transmitter sends, to a receiver, a MAC PDU to which error correction code has been added. The receiver sends an acknowledgement (ACK) to the transmitter if the received MAC PDU is error-free or if the error could be corrected. Conversely, if the received MAC PDU has an error, or if the error could not be corrected, the receiver requests the resending of the data by sending a negative acknowledgement (NACK). The transmitter, upon receiving the NACK, resends the concerned MAC PDU.

The outer-ARQ is a protocol to salvage the RLC PDU included in the MAC PDU that is missing when the HARQ resending is not successful within a given number of tries or within a given period. The transmitter appends a sequence number to the RLC PDU, and the receiver uses this number to report the arrival status of the PDU to the transmitter. Based on this report, the transmitter resends the RLC PDU that has not arrived. In the 3G system, this PDU arrival status report is a part of the status report function.

In the conventional 3G system, the size of the RLC PDU handled by the RLC layer was semi-fixed and could not be changed during transmission. Under 3G LTE, it is agreed to enable flexible change of RLC PDU size corresponding to channel conditions at the time of sending. In the outer-ARQ, through the enabling of this size change function, RLC PDU size can be re-segmented into an even smaller size at the RLC layer if, at the time of resending of the RLC PDU, channel conditions have deteriorated since the initial sending of the RLC PDU. As a result, the resending of RLC PDU under worse transmission conditions is possible.

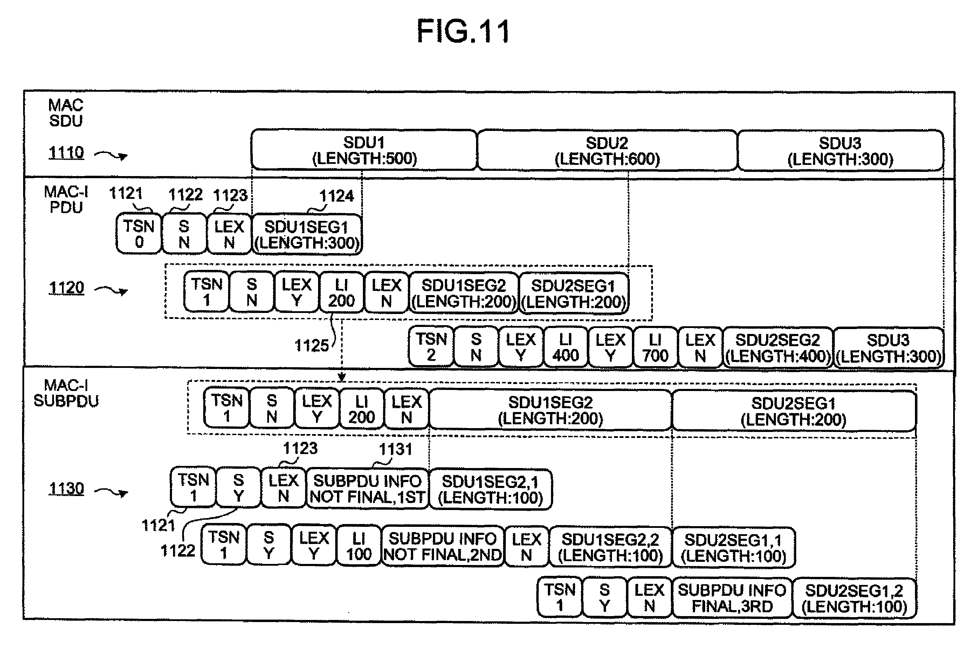

Fig. 11 is a schematic of a conventional PDU format and PDU re-segmentation method for realizing outer-ARQ. A MAC SDU (corresponding to the abovementioned RLC SDU and hereinafter, "SDU") 1110 includes an SDU 1, an SDU 2, and an SDU 3.

A MAC-I (corresponding to the abovementioned RLC PDU and hereinafter, "PDU") 1120 is formed by segmenting the SDU 1110 and includes a transmission sequence number (TSN) 1121, a sub-framing indicator (S) 1122, a length extension indicator (LEX) 1123, and a SDU seg 1124. The TSN 1112 is a sequence number added to each PDU 1120.

The S 1122 is information indicating, by YES/NO, whether the PDU 1120 is a product of re-segmentation. The LEX 1123 is information indicating, by YES/NO, whether in the PDU 1120, plural segments of the SDU 1110 are linked. The SDU seg 1124 is a segment of the SDU 1110. When plural segments of the SDU 1110 are linked in the PDU 1120 (LEX: YES), a length indicator (LI) 1125 indicating the boundary position of each of the segments of the SDU 1110 is appended.

A MAC-I subPDU (hereinafter, "subPDU") 1130 formed by re-segmenting the PDU 1120 has a configuration of the PDU 1120 with a subPDU info 1131 appended. The subPDU info 1131 is information indicating a sequence number of a subPDU 1130 among plural subPDU 1130 formed by segmenting the PDU 1120. In this way, the PDU 1120 and the subPDU 1130 have a format that follows basically the same rule. For example, refer to, "Framing in the MAC Entity", internet URL
http://www.3gpp.or/ftp/tsg ran/WG2 RL2/TSGR 52/Documents/R2 -061012.zip, searched 15 May 2006.

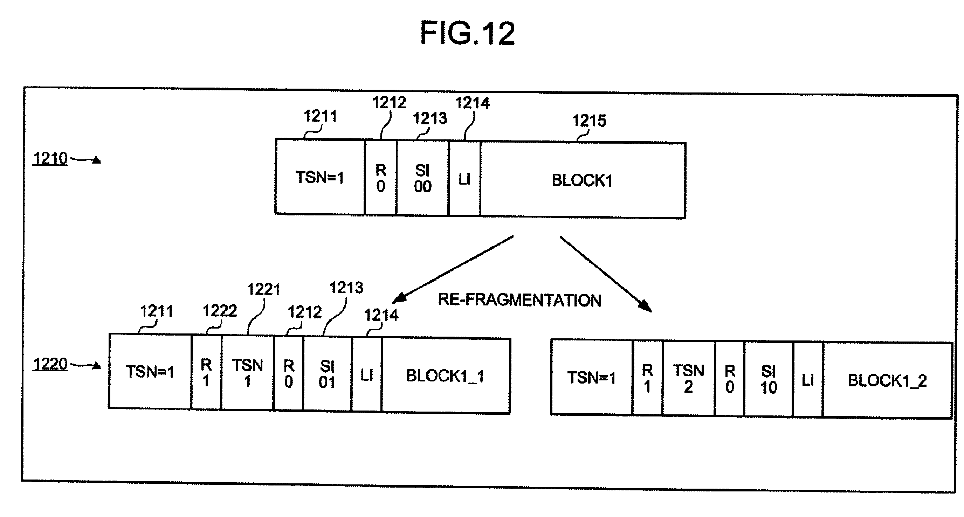

Fig. 12 is another schematic of a conventional PDU format and PDU re-segmentation method for realizing outer-ARQ. An RLC PDU (hereinafter "PDU") 1210 is formed by segmenting a block (not shown and corresponding to the abovementioned RLC SDU). The PDU 1210 includes a TSN 1211, an R 1212, an SI 1213, an LI 1214, and a block1 1215.

The TSN 1211 is a sequence number appended to each PDU 1210. The R 1212 (corresponding to the abovementioned S 1122) is information indicating, by 1/0, whether the PDU 1210 is a product of re-segmentation. The SI 1213 (corresponding to the abovementioned LEX 1123) is information indicating, by YES/NO, whether plural segments of plural blocks are linked in the PDU 1210. The LI 1214 (corresponding to the abovementioned LI 1125) is information indicating the length of a block or a block segment. The block1 1215 is a block segment.

An RLC subPDU (corresponding to the abovementioned MAC-I subPDU and hereinafter, "subPDU") 1220 is formed by re-segmenting the PDU 1210 and has a configuration of the PDU 1210 with a TSN 1221. and an R 1222 appended. The TSN 1221 is a sequence number added to each PDU 1220. The R 1222 is information indicating, by 1/0, whether the subPDU 1220 is a product of re-segmentation.

In this way, the PDU 1210 and the subPDU 1220 have a format that follows basically the same rules. Under this format, the subPDU 1220 can be re-segmented a further number of times and for each re-segmentation, a new TSN and R are appended to the segmented subPDU. For example, refer to "LTE-Data Framing", internet URL
http://www.3gpp.org/ftp/tsg ran/WG2 RL2/TSGR2 52/Documents/R2-060893.zip, searched 15 May 2006.

However, in the above conventional technologies, the PDU before re-segmentation and the subPDU after re-segmentation have a format that follows basically the same rules. Hence, at each re-segmentation of a PDU that includes plural SDU segments that are linked, the transmitter determines in which subPDU a link boundary of the SDU is to be included after the re-segmentation. Further, the LI value must be recalculated and appended to the subPDU that includes the link boundary. Hence, a problem exists with conventional technology in that transmitter processing is complicated at the time of resending.

Further, in the conventional technologies, the receiver determines whether each received PDU is a product of re-segmentation. When the PDU is a product of re-segmentation, the receiver must further determine whether all of the subPDU necessary for assembling the PDU have been received, the processing of which is complicated. Therefore, a problem exists with conventional technology in that at the time of SDU assembly and/or issuing a resend request, the processing to determine whether all of the necessary PDU are present is complicated.

Further, with the technology described in "LTE-Data Framing", when the subPDU can not be correctly received, the receiver directly specifies the subPDU in order to request the subPDU to be resent. In other words, in addition to the sequence number of the original PDU, i.e., the PDU subjected to segmentation, the receiver must report to the transmitter, the sequence number of each subPDU. Hence, the volume of control information required for requesting the resending of the subPDU increases resulting in a problem in which band that can be utilized for data transmission decreases.

### SUMMARY OF THE INVENTION

It is desirable to at least solve the above problems in the conventional technologies.

A communication method according to an embodiment of an aspect of the present invention includes re-transmitting, from a transmitter to a receiver, a packet or plural packet segments formed by segmenting the packet, when the transmitter receives a re-transmission request from the receiver. The packet includes identification information and information indicating that the packet is not segmented, and each of the packet segments includes the identification information, information indicating that the packet is segmented, and information for assembling the packet segments.

A method according to an embodiment of another aspect of the present invention is a method of transmitting a packet from a transmitter to a receiver. The method includes: forming, at a first layer, a first packet by segmenting or integrating information output from an upper layer than the first layer; forming, at a second layer, plural second packets by segmenting the first packet; and re-transmitting the first packet or the second packets from the transmitter to the receiver when the transmitter receives a re-transmission request from the receiver.

A transmitter according to an embodiment of still another aspect of the present invention includes: a re-transmitting unit that re-transmits, to a receiver, a packet or plural packet segments formed by segmenting the packet, when receiving a re-transmission request from the receiver. The packet includes identification information and information indicating that the packet is not segmented, and each of the packet segments includes the identification information, information indicating that the packet is segmented, and information for assembling the packet segments.

A receiver according to an embodiment of still another aspect of the present invention receives a packet or plural packet segments from a transmitter. The packet includes first information on identification and second information indicating that the packet is not segmented, and each of the packet segments includes the first information, third information indicating that the packet is segmented, and fourth information for assembling the packet segments. The receiver includes an assembling unit that assembles the packet segments based on the fourth information.

The other features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a communication system according to a first embodiment of the present invention;
Fig. 2 is a schematic of a format of a PDU and a subPDU in the communication system;
Fig. 3 is a sequence chart of a resending process of the communication system;
Fig. 4 is a flowchart of PDU re-segmentation performed by a PDU segmenting unit of a transmitter according to the first embodiment;
Fig. 5 is a schematic of a process of forming the subPDU for reference with Fig. 4;
Fig. 6 is a schematic illustrating an example of a management table included in the PDU assembling unit;
Fig. 7 is a flowchart of PDU assembly processing executed by the PDU assembling unit;
Fig. 8 is a schematic of PDU assembly with reference to Fig. 7;
Fig. 9 is a schematic illustrating an example of a management table provided in the PDU assembling unit;
Fig. 10 is a schematic of an example of a PDU format according to the first embodiment;
Fig. 11 is an example of a conventional PDU format and a PDU re-segmentation method for realizing outer-ARQ;
Fig. 12 is another example of a conventional PDU format and a PDU re-segmentation method for realizing outer-ARQ;
Fig. 13 is a schematic of a PDU and subPDU format according to a second embodiment;
Fig. 14 is a schematic of a PDU and subPDU format according to a third embodiment;
Fig. 15 is a schematic of a process of forming the subPDU according to the second and third embodiment for reference with Fig. 4; and
Fig. 16 is a schematic of a process of assembling the PDU according to the second and third embodiment for reference with Fig. 7.

### DETAILED DESCRIPTION OF THE PREFERRED EMBODIMENTS

Referring to the accompanying drawings, exemplary embodiments according to the present invention are explained in detail below.

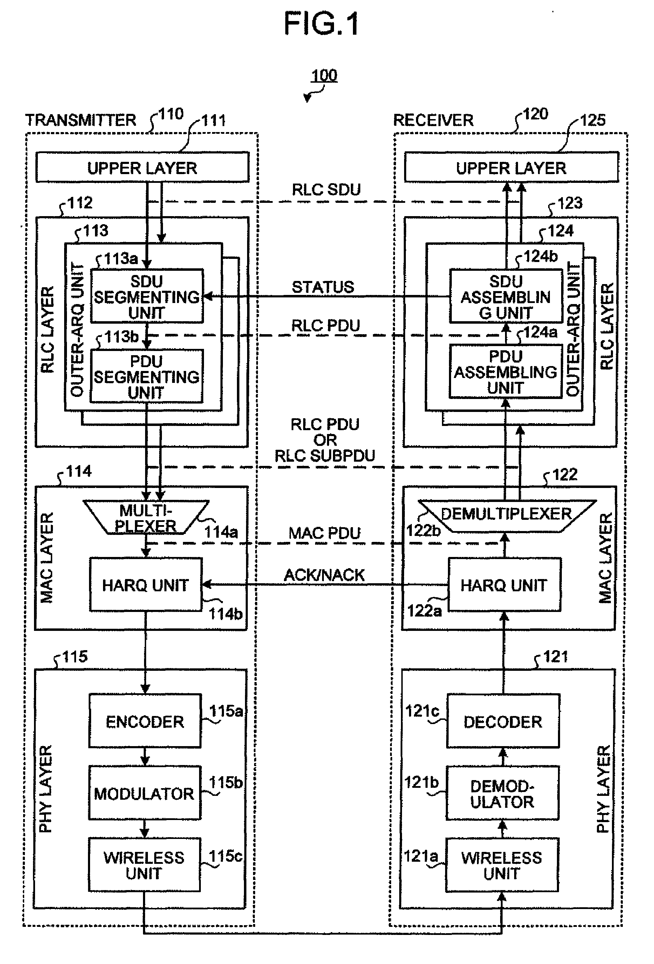

Fig. 1 is a block diagram of a communication system according to the first embodiment of the present invention. A communication system 100 includes a transmitter 110 and a receiver 120. The transmitter 110 includes an upper layer 111, an RLC layer 112, a MAC layer 114, and a PHY layer 115.

The RLC layer 112 includes an outer-ARQ unit 113. Specifically, the RLC layer 112 includes, as sub-layers, an SDU segmenting unit 113a (first layer) and a PDU segmenting unit 113b (second layer). The SDU segmenting unit 113a segments or links an RLC SDU (hereinafter, "SDU") output from the upper layer 111, forms an RLC PDU (hereinafter, "PDU") that is a first packet (a specific packet), and outputs the PDU to the PDU segmenting unit 113b.

The PDU segmenting unit 113b is provided independent of the SDU segmenting unit 113a at a lower level. The PDU segmenting unit 113b re-segments, based on a resend request sent from the receiver 120, the PDU output from the SDU segmenting unit 113a into a predetermined number of segments (hereinafter, "division number") to form plural RLC subPDU (hereinafter, "subPDU") that are second packets that result from the re-segmentation, and outputs the subPDU to the MAC layer 114.

However, re-segmentation of the PDU is performed corresponding to transmission conditions (channel conditions) and is not performed regularly. When PDU re-segmentation is not performed, such as at the initial sending and when transmission conditions (channel conditions) have not deteriorated, the PDU segmenting unit 113b outputs, to the MAC layer 114, the PDU output from the SDU segmenting unit 113a as is. Therefore, when segmentation of the PDU is not performed, for the most part, processing by the PDU segmenting unit 113b is not performed.

The PDU segmenting unit 113b, corresponding to transmission conditions, can change the division number and resend the PDU. For example, when one or more subPDUs can not be correctly received by the receiver 120, even when the transmitter 110 has sent the PDU after segmenting the PDU into plural subPDUs having a given size, and a resend request related to the concerned PDU from the receiver 120 is received, the division number is changed, and a subPDU having another size is formed and output to the MAC layer 114. In this case as well, configuration can be such that if the communication conditions have not deteriorated, the division number is not changed.

Here, the RLC layer 112 includes plural auter-ARQ units 113. As a result, the RLC layer 112 concurrently segments or re-segments the plural SDUs output from the upper layer 111 and outputs, to the MAC layer 114, the PDUs or the subPDUs formed by the segmentation or the re-segmentation.

The MAC layer 114 includes a multiplexer 114a and a HARQ unit 114b. The multiplexer 114a forms a MAC PDU by multiplexing the PDU or the subPDUs formed by the concurrent processing at RLC layer 112 and output therefrom. The multiplexer 114a sequentially outputs the MAC PDUs to the HARQ unit 114b. The HARQ unit 114b appends a correction code to the MAC PDUs output from the multiplexer 114a and transmits, to the receiver 120 through the PHY layer 115, the MAC PDUs with the correction code appended.

The HARQ unit 114b controls the resending based on the resend request sent from the receiver 120. Specifically, when a resend request is sent from the receiver 120, the HARQ unit 114b sends, to the receiver 120, the MAC PDU corresponding to the resend request.

The PHY layer 115 includes an encoder 115a, a modulator 115b, and a wireless unit 115c. The encoder 115a encodes the MAC PDUs output from the MAC layer 114, and outputs the encoded MAC PDUs as a digital signal to the modulator 115b. The modulator 115b converts the digital signal received from the encoder 115a into an analog signal, and outputs the analog signal to the wireless unit 115c. The wireless unit 115c wirelessly transmits the received analog signal to the receiver 120.

The receiver 120 includes a PHY layer 121, a MAC layer 122, an RLC layer 123, and an upper layer 125. The PHY layer 121 includes a wireless unit 121a, a demodulator 121b, and a decoder 121c. The wireless unit 121a receives the analog signal sent from the transmitter 110 and outputs the analog signal to the demodulator 121b. The demodulator 121b converts the analog signal received from the wireless unit 121a into a digital signal, and outputs the digital signal to the decoder 121c. The decoder 121c decodes the digital signal output from the demodulator 121b and outputs the decoded digital signal to the MAC layer 122 as a MAC PDU.

The MAC layer 122 includes a HARQ unit 122a and a demultiplexer 122b. The HARQ unit 122a combines and changes the arrangement of the MAC PDU received from the receiver 120 through the PHY layer 121, and outputs the MAC PDU to the demultiplexer 122b. The demultiplexer 122b demultiplexes plural PDUs or subPDUs that are multiplexed in the MAC PDU and output from the HARQ unit 122a, and outputs the demultiplexed plural PDUs or subPDUs to the RLC layer 123. Further, the HARQ unit 122a reports, to the HARQ unit 114b of the transmitter 110, the receiving condition of the MAC PDU as an ACK/NACK signal, and the HARQ unit 114b resends the reported MAC PDU when the MAC PDU can not be correctly received (NACK).

The RLC layer 123 includes an outer-ARQ unit 124. Specifically, the RLC layer 123, as sub-layers, includes a PDU assembling unit 124a (first layer) and an SDU assembling unit 124b (second layer). The PDU assembling unit 124a, when a subPDU is output from the MAC layer 122, outputs the subPDU to the SDU assembling unit 124b as PDU after acquiring and assembling predefined subPDU.

The PDU assembling unit 124a, when a PDU is output from the MAC layer 122, outputs the PDU as is to the SDU assembling unit 124b. In other words, regardless of whether subPDU is received, PDU is output to the SDU assembling unit 124b; subPDU is not. As a result, at the SDU assembling unit 124b, it is not necessary to determine whether PDU has been re-segmented or whether all of the subPDU are present when the PDU has been re-segmented. Even when the PDU has been re-segmented and sent, operation can be performed without changing the configuration of the SDU assembling unit.

The receiver 120 includes a buffer (not shown). The PDU or the subPDU received through the PHY layer 121 is temporarily stored in the buffer until assembly by the RLC layer 123.

As described, a subPDU received by the receiver 120 might include a resent subPDU whose division number is changed corresponding to transmission conditions. For example, when the PDU assembling unit 124a receives subPDU that is from the PDU segmenting unit 113b of the transmitter 110, is segmented from the same PDU, and whose division number has been changed, the assembly of the sibling subPDU having a different number of segmentations can be prevented by discarding the subPDU stored in the buffer before the changing of the division number.

The SDU assembling unit 124b is provided on a higher layer than the PDU assembling unit 124a. The SDU assembling unit 124b waits for a given PDU that is output from the MAC layer 122 or the PDU assembling unit 124a to be acquired, assembles the acquired PDU to restore the SDU, and outputs the SDU to an upper layer 125. Further, the SDU assembling unit 124b reports, to the SDU segmenting unit 113a of the transmitter 110, the receiving condition of the PDU as status information, and resends the PDU if the SDU segmenting unit 113a has not correctly received the PDU. Here, the RLC layer 123 includes plural outer-ARQ units 124 and concurrently assembles the plural PDU or subPDU output from the MAC layer 122 to output SDU to the upper layer 125.

Here, the RLC layer 112 and the RLC layer 123 include plural outer-ARQ units 113 and plural outer-ARQ units 124, respectively and plural PDUs or subPDUs are concurrently assembled. However, one unit of the outer-ARQ unit 113 or the outer-ARQ unit 124 may be provided. In this case, the multiplexer 114a of the MAC layer 114 or the demultiplexer 122b of the MAC layer 122 can be omitted.

The SDU segmenting unit 113a and the PDU segmenting unit 113b, and the PDU assembling unit 124a and the SDU assembling unit 124b are configured as independent layers, respectively. However, a logical abstract relationship makes the former and latter independent. To actually realize a device, the configuration is not limited thereto physically. Further, for simplicity, here the ACK/NACK signals and the status information were illustrated as information reported directly between corresponding layers of the receiver 120 and the transmitter 110. However, in an actual system, each information is reported by passing through a lower layer.

The PDU or the subPDU output from the outer-ARQ unit 113 is described above to be transmitted to the receiver 120 by passing through the PHY layer 115 as MAC PDU. However, in the description below, the MAC PDU has no relation and therefore, for simplicity, the transmitter 110 outputs the PDU or the subPDU to the receiver 120. Similarly, the receiver 120 receives the PDU or the subPDU.

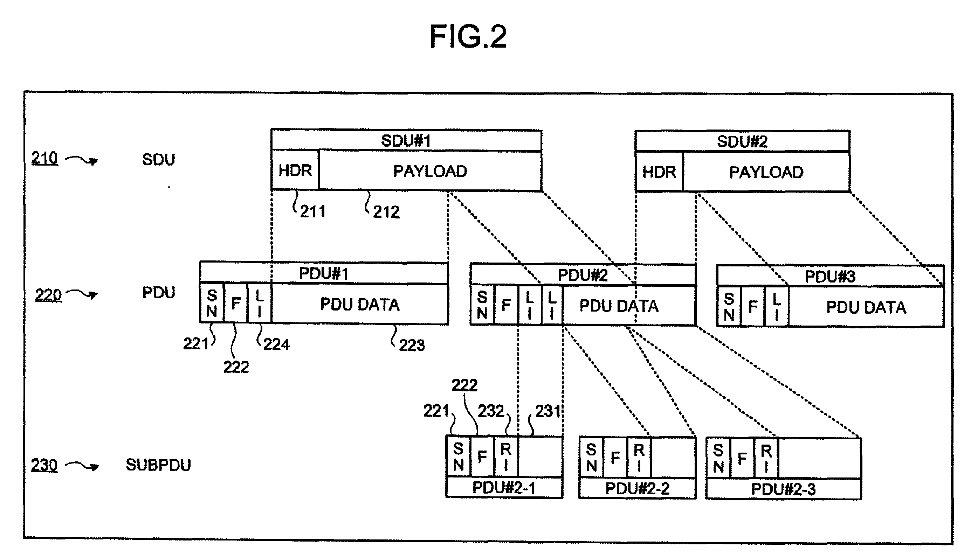

Fig. 2 is a schematic of a format of a PDU and a subPDU in the communication system 100. An SDU 210 is an SDU output from the upper layer 111. A PDU 220 is a PDU output by the SDU segmenting unit 113a. A subPDU 230 is a subPDU output by the PDU segmenting unit 113b.

There are an SDU#1 and an SDU#2 as the SDU 210. The SDU 210 includes a header (hdr) 211 and a payload 212. The hdr 211 is appended at the head of the SDU 210 and is information concerning the SDU 210, such as information concerning the destination of the SDU 210. The payload 212 is the actual data intended to be transmitted, excluding the hdr 211.

There are a PDU#1, a PDU#2, and a PDU#3 as PDU 220. The PDU 220 includes a sequence number (SN) 221, a re-segmentation indicator flag (F) 222, a PDU data 223, and a length indicator (LI) 224. The SN 221 is a sequence number between a limited range to identify a PDU 220 among sibling PDU 220. For example, values of the SN 221 of the PDU#1, the PDU#2, and the PDU#3 are "1", "2", and "3", respectively.

The F 222 is information indicating whether the PDU 220 is a product of re-segmentation. Here, as the PDU 220 is not a product of re-segmentation, the values of the F 222 of PDU#1, the PDU#2, and the PDU#3 are all "0", for example. Conversely, a value of the F 222 of a subPDU that results from re-segmentation of the PDU 220 is, for example, "1". By this information, the PDU assembling unit 124a of the receiver 120 can easily determine whether PDU or subPDU has been received from the MAC layer 122 and can perform a corresponding type of processing.

The PDU data 223 concerns SDU 210 that has been segmented into a predefined number of segments and may be two or more of the SDU 210s that are linked. Further, when the size of the SDU 210 is smaller than that of the PDU 220, the PDU data 223 concerns an SDU 210 in which an entirety of the SDU 210 is included in one PDU 220. When a size of a segment of the SDU 210 is smaller than the size of the PDU 220, the excess portion of the PDU 220 can be filled with padding, i.e., meaningless random data.

Here, the PDU data 223 of the PDU#1 includes a beginning half segment of a SDU#1 that has been segmented into two segments. The PDU data 223 of the PDU#2 includes a last half segment of the SDU#1 segmented into two segments and linked to a beginning first half segment of a SDU#2 that has been segmented into two segments. The PDU#3 includes a last half segment of the SDU#2 that has been segmented into two segments.

The LI 224 is information indicating segmentation and linking conditions of the payload 212 of the SDU 210. For example, the LI 224 of the PDU#2 indicates the boundary of the last half segment of the SDU#1 and the first half segment of the SDU#2.

Here, as the subPDU 230, there are a PDU#2-1, a PDU#2-2, and a PDU#2-3 resulting from segmentation of the PDU#2 into three segments. The subPDU 230 includes the SN 221, the F 222, a subPDU data 231, and re-segmentation information (RI) 232. The SN 221 of the subPDU 230 is a copy of the SN 221 of the original PDU 220 before segmentation. Here, as a value of the SN 221 of the PDU 220 before segmentation is "2", all of the SN values of the PDU#2-1, the PDU#2-2, and the PDU#2-3 are "2" .

The F 222 of the subPDU 230 is a copy of the F 222 of the PDU 220. However, as the subPDU 230 is formed by re-segmentation of the PDU 220, all of the values the F 222 are changed to, for example, "1".

The subPDU data 231 of the subPDU 230 is the result of segmenting a block of the LI 224 and the PDU data 223 of the PDU 220 by a size according to the division number. In other words, without discriminating the LI 224 and the PDU data 223 of the PDU 220, the PDU segmenting unit 113b segments this block, as one-single entity.

Even when plural LIs 224 are present due to the PDU data 223 of the PDU 220 being plural SDU 210 segments that are linked, the PDU segmenting unit 113b similarly segments the plural LI 224 and the plural SDU 210 segments as one block. Here, the PDU#2-1, the PDU#2-2, and the PDU#2-3 segments are respectively results of resegmenting the block including the LI 224 and the PDU data 223 of the PDU#2 into three.

Thus, Without discriminating the LI and the PDU data by handling both as one block, no matter how many segments of plural SDUs 210 the PDU 220 includes, this block can be segmented in the same manner as the case when the PDU 220 includes single SDU 210 or a segment of single SDU 210.

The RI 232 of the subPDU 230 is re-segmentation information concerning the subPDU data 231 and includes an RI_L, an RI_N, and an RI_F (not shown). The RI__L is information indicating the size of the subPDU data 231. The RI_N is information indicating a sequence number of a segment among segments that have been segmented from the original PDU 220. Here, the values of the RI-N of the PDU#2-1, the PDU#2-2, and the PDU#2-3 are "1", "2", and "3", respectively.

The RI_F is information indicating whether the subPDU data 231 is the last segment among segments segmented from the original PDU 220. Here, the last subPDU 230 among the PDU#2-1, the PDU#2-2, and the PDU#2-3 is the PDU#2-3. Therefore, for example, the value of the RI_F of the PDU#2-3 is "1", and the values of the PDU#2-2 and the PDU#2-3 are both "0". The elements of the format may be expressed by other means and the sequence thereof is not limited to that described above.

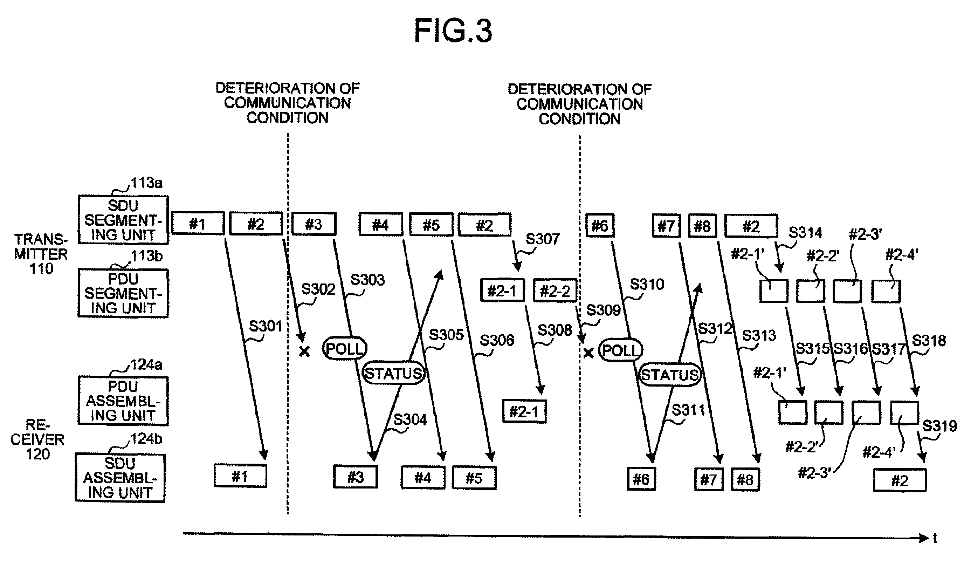

Fig. 3 is a sequence chart of the resending process of the communication system 100. The horizontal axis indicates a time t. The transmitter 110 sends, to the receiver 120, the PDU#1 (indicated in Fig. 3 by only "#1", hereinafter also for PDU#2, PDU#3) output from the SDU segmenting unit 113a (step S301). In this case, the PDU segmenting unit 113b does not perform re-segmentation of the PDU 220 output from the SDU segmenting unit 113a.

The transmitter 110 sends the PDU#2 output from the SDU segmenting unit 113a to the receiver 120 (step 5302) . In this example, here, the communication condition between the transmitter 110 and the receiver 120 deteriorates and the PDU#2 can not be correctly received. The transmitter 110, hereafter, reduces the size of the PDU 220 to be sent.

The transmitter 110 sends, to the receiver 120, the PDU#3 output from the SDU segmenting unit 113a and poll information inquiring about the receiving condition on the receiver 120 side (step S303). When the receiver 120 receives the poll sent from the transmitter 110 at step S303, the receiver 120 sends, to the transmitter 110, status information indicating that up to the PDU#1 has been correctly received (step S304).

Here, the receiver 120 sends the status information corresponding to the poll information sent from the transmitter 110; however, the sending of status information may be autonomic. For example, methods in present G3 systems, such as sending cyclically and sending when the SN of a received PDU is not sequential, may also be employed.

The transmitter 110 sends, to the receiver 120, a PDU#4 and a PDU#5 output from the SDU segmenting unit 113a (steps S305 and S306). Upon receiving status information output from the receiver 120 at step S304, the transmitter 110 re-segments the PDU#2 at the PDU segmenting unit 113b (step S307). The transmitter 110 sends the PDU#2-1 and the PDU#2-2 as the subPDU 230 to the receiver 120 (steps S308 and S309). Here in this example, the communication condition between the transmitter 110 and the receiver 120 deteriorates, and the receiver 120 is unable to correctly receive the PDU#2-2. The transmitter 110, hereafter, reduces the size of the PDU 220 to be sent.

The transmitter 110 sends, to the receiver 120, a PDU#6 output from the SDU segmenting unit 113a and poll information (step S310). When the receiver 120 receives the poll sent from the transmitter 110 at step S310, the receiver 120 sends, to the transmitter 110, status information indicating that up to the PDU#1 has been correctly received (step S311). The transmitter 110 sends, to the receiver 120, a PDU#7 and a PDU#8 output from the SDU segmenting unit 113a (steps S312 and S313).

Upon receiving the status information sent from the receiver 120 at step S311, the transmitter 110 re-segments the PDU#2 at the PDU segmenting unit 113b (step S314) and sends a PDU#2-1' to a PDU#2-4' as the subPDU 230 to the receiver 120 (steps S315 to S318). The receiver 120 assembles the PDU#2 based on the PDU#2-1' to a PDU#2-4' received (step S319), and a series of processing ends.

Here, when the receiver 120 can not correctly receive the subPDU 230, the transmitter 110 sends the subPDU 230 formed by increasing the division number from two to four, which enables the sending of the subPDU 230 to be performed under robust conditions even when the communication condition has deteriorated. The transmitter 110 may send the subPDU 230 having the same division number without changing the division number by judging from the communication condition.

Further, when the receiver 120 can not correctly receive a part of the subPDU 230, the subPDU 230 is resent by changing the division number of the original PDU 220, which can reduce the volume of status information to be sent by the receiver 120 due to information indicating, for example, "up to PDU#1 has been correctly received".

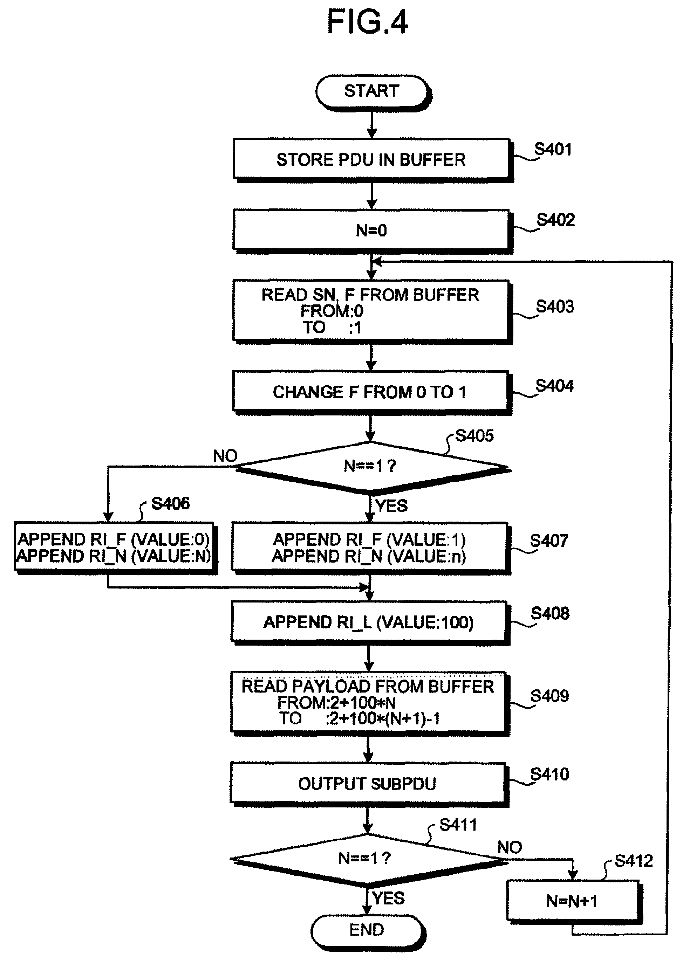

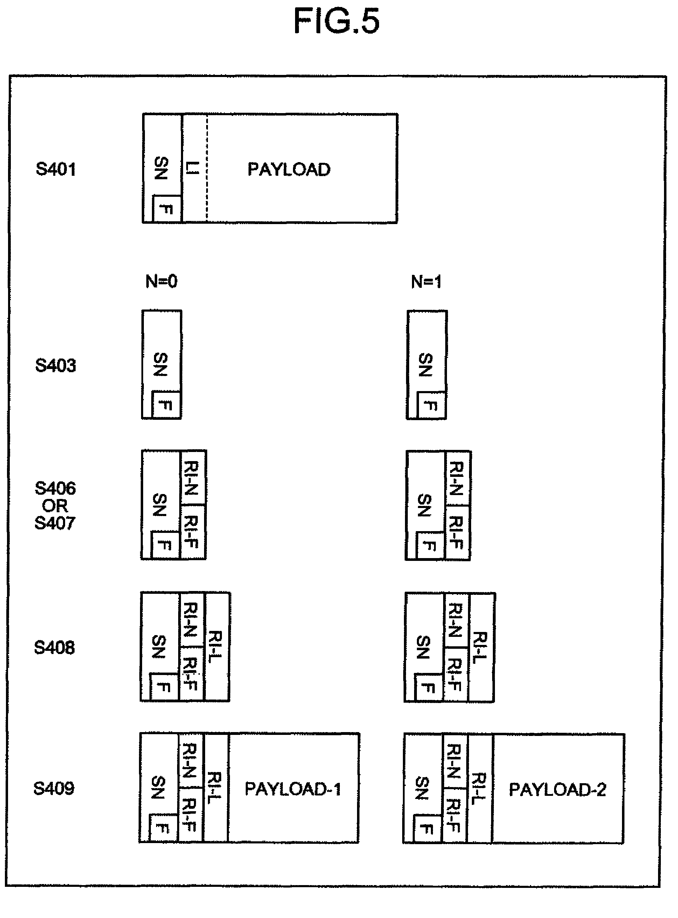

Fig. 4 is a flowchart of re-segmentation of PDU 220 performed by the PDU segmenting unit 113b of the transmitter 110. Fig. 5 is a schematic of a process of forming the subPDU 230 for reference with Fig. 4.

Here in this example, the size of the block including the LI 224 and the PDU data 223 of the PDU 220 output from the SDU segmenting unit 113a is 200 octets, and the PDU segmenting unit 113b segments the PDU 220 into two subPDU 230. In other words, the PDU segmenting unit 113b re-segments the block including the LI 224 and the PDU data 223 of the PDU 220 into two subPDU 230 having 100 octets each.

A variable n indicates a sequence number of a subPDU 230 among plural subPDU 230 formed from the original PDU 220. Though the first subPDU 230 is referred to as "subPDU#1" in Fig. 2, the value of n of the first subPDU 230 is set as "0" for simplicity, hereinafter. Here, as the PDU 220 is segmented into two, when the value of n is "0", the subPDU 230 being formed is the first subPDU 230. Further, when n is "1", the subPDU 230 being formed is the last subPDU 230.

The PDU 220 output from the SDU segmenting unit 113a is stored in the buffer (not shown) of the transmitter 110 (step S401) (refer to Fig. 5). "0" is substituted for the variable n (step S402). In other words, the subPDU 230 being formed is set as the first subPDU 230.

The buffer addresses from "0" to "1" are read (step S403) (refer to Fig. 5). In other words, the SN 221 and the F 222 of the original PDU 220 are read. The value of the F 222 is changed from "0" to "1" (step S404) (refer to Fig. 5). In other words, information indicating that the subPDU 230 being formed is a product of re-segmentation is appended.

It is determined whether the value of the variable n is "1" (step S405), i.e., whether the subPDU 230 being formed is the last subPDU 230. When the variable n is "1" (step S405: YES), RI_F (value: 1) and RI_N (value: n) are appended to the subPDU 230 being formed (step S406) (refer to Fig. 5). In other words, information indicating that the subPDU 230 being formed is the last subPDU 230 and a corresponding sequence number (here, n=1) are appended.

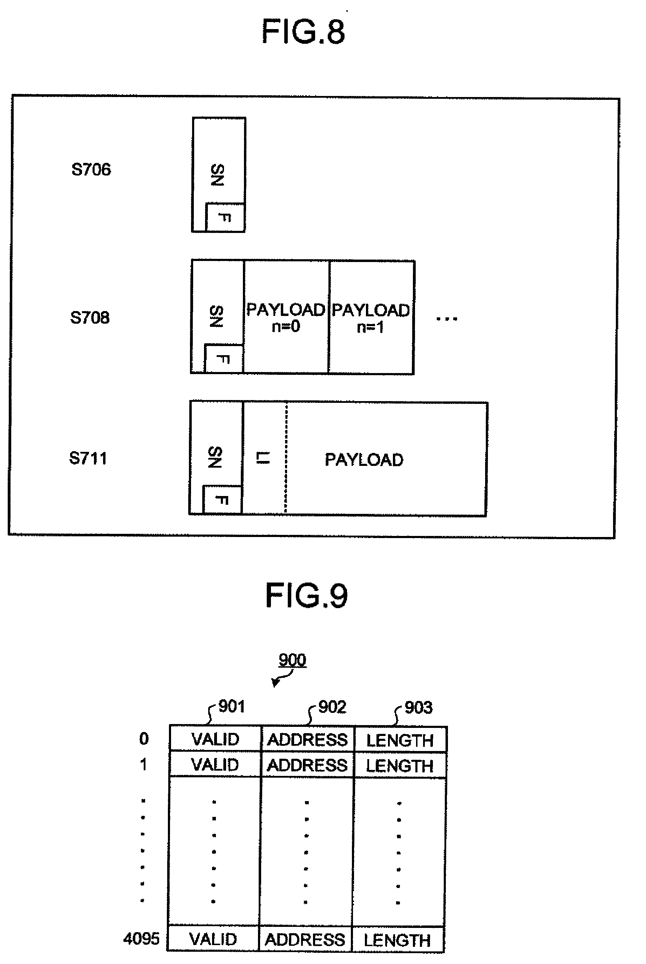

When the value of variable n is "0" (step S405: NO) (refer to Fig. 9), RI_F (value: 0) and RI_N (value: n) are appended to the subPDU 230 being formed (step S407) (refer to Fig. 5). In other words, information indicating that the subPDU 230 being formed is not the last subPDU 230 and a corresponding sequence number (here, n=0) are added.

RI_L (value: 100) is appended to the subPDU 230 being formed (step S408) (refer to Fig. 5). In other words, information is appended indicating that the size of the segment of original PDU 220 included in the subPDU 230 being formed is 100 octets. Buffer addresses from "2+100*n" to "2+100* (n+1)-1" are read (step S409) (refer to Fig. 5). In other words, 100-octet segments of the block including the PDU data 223 and the LI 224 of the original PDU 220 are read as the subPDU data 231. of the subPDU 230 being formed.

The subPDU 230 including the SN 221, the F 222, the RI_N, the RI_F, the RI_L, and the subPDU data 231 is output to the MAC layer 114 (step S410), and it is determined whether the value of the variable n is "1" (step S411). In other words, it is determined whether the subPDU 230 output at step S411 is the last subPDU 230. When the value of the variable n is "0" (step S411: NO), "1" is added to the value of the variable n (step S412), the process returns to step S403. When the value of the variable n is "1" (step S411; YES), a series of processing ends.

In this way, without discriminating the LI 224 and the PDU data 223 of the PDU 220, by handling both as one block, even when a PDU 220 including plural SDUs 210 or linked SDU 210 segments is re-segmented, it is not necessary to determine in which subPDU a link boundary of the SDU is included after the re-segmentation or to recalculate the LI value 224.

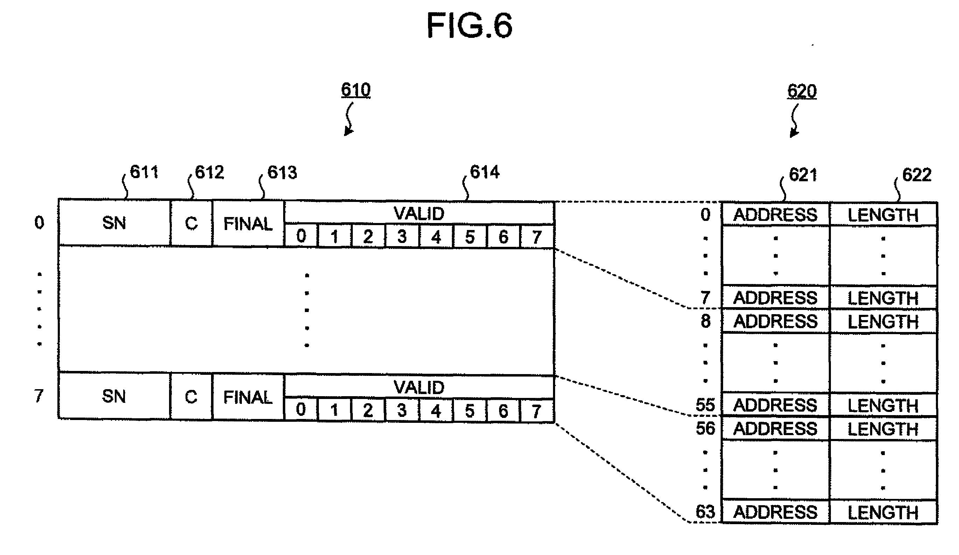

Fig. 6 is a schematic illustrating an example of a management table included in the PDU assembling unit 124a of the receiver 120. The PDU assembling unit 124a includes management tables 610 and 620. The management table 610 includes a SN 611, a C 612, a final 613, and a valid 614 of each PDU 220.

The SN 611 is a copy of the SN 221 of each PDU 220. The C 612 is information indicating whether the PDU 220 is a product of re-segmentation. For example, when the PDU 220 has been re-segmented, the value of the C 612 is "1", and when the PDU 220 is not a product of re-segmentation, the value is "0".

The final 613 is the RI_N value of the last subPDU 230 among the plural subPDUs 230 formed by segmenting the PDU 220. In other words, at the time the subPDU 230 having a RI_F value of "1" is received, the RI_N value of the subPDU 230 is written for the final 613.

The valid 614 is provided in plural. Here, the management table 610 includes eight valids 614, from (0) to (7). The valid 614 corresponds to each subPDU 230 after re-segmentation, and is information indicating whether the respective subPDU 230 has been received. The initial value of the valid 614, for example, is "0". Further, for example, when the PDU assembling unit 124a receives a subPDU 230 having a RI_N of "0", the PDU assembling unit 124a writes "1" in the corresponding valid (0).

Here, as eight valids 614 are provided, a PDU 220 that has been segmented into at most eight segments can be assembled. Further, when the PDU 220 does not include eight segments, for example, a PDU 220 has been segmented into two segments, upon receiving a PDU#2-2 of a subPDU 230 having a RI_N value of "1", "1" is written in all of the valids 614 (1) to (7).

The management table 620 includes an address 621 and a length 622. In each row, one subPDU 230 segment is stored with the corresponding address 621 that indicates the first address from which the buffer provided in the receiver 120 (not shown) is secured, and the corresponding length 622 that indicates the length of the segment. Here, the addresses 621 and the lengths 622 of each subPDU 230 of the PDU 220 having a SN 611 of "0" in the management table 610 are stored in each of the rows (from zero to seven) of the management table 620.

The PDU assembling unit 124a writes, each time receiving subPDU 230, the subPDU data 231 of the subPDU 230 in the buffer, and updates the management table 620 each time writing the subPDU data 231 in the buffer.

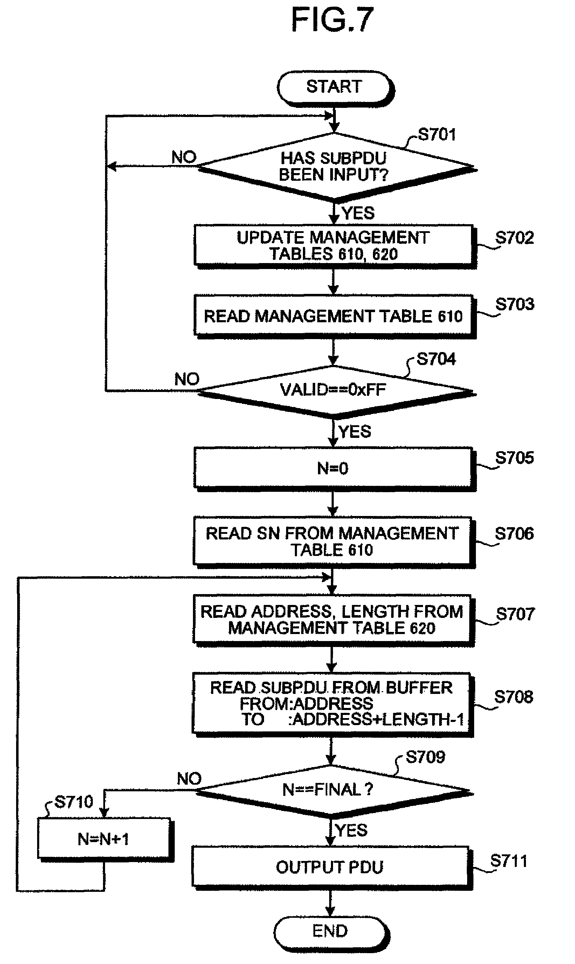

Fig. 7 is a flowchart of PDU assembly processing executed by the PDU assembling unit 124a of the receiver 120. Fig. 8 is a schematic of PDU assembly with reference to Fig. 7. Here, the variable n indicates a sequence number of the subPDU 230 being formed among the subPDUs 230 formed by segmenting the original PDU 220.

It is waited until the subPDU 230 is input from the MAC layer 122 (step S701: NO, loop). Upon input of the subPDU 230 (step S701: YES), the input subPDU 230 is stored in the buffer, and the management tables 610 and 620 are updated (step S702).

The management table 610 is read (step S703). It is determined whether all of the values of the valid 614 are "1" (step S704), i.e., whether all of the subPDU 230 corresponding to the PDU 220 being formed have been received. "0" is substituted for the variable n (step S705), i.e., the subPDU 230 to be read is set as the first subPDU 230.

The SN 611 is read from the management table 610 (step S706) (refer to Fig. 8), and the address 621 and the length 622 corresponding to the subPDU 230 being read are read from the management table 620 (step S'7D7). The buffer addresses from "address" to "address+length-1" are read (step S708) (refer to Fig. 8). In other words, the subPDU data 231 of the subPDU 230 is read from the buffer based on the address 621 and the length 622 read at step S707.

It is determined whether the value of the variable n is equal to the final 613 (step S709), i.e., whether the subPDU 230 being formed is the last subPDU 230 among the subPDU 230s formed by segmenting the original PDU 220. When the value of the variable n is not equal to the final 613 (step S709: NO), "1" is added to the variable n (step S710), and the process returns to step S707. When the value of the variable n is equal to the final 613 (step S709: YES), the formed PDU 220 is output to the SDU assembling unit 124b (step S711), and a series of processing ends.

Fig. 9 is schematic illustrating an example of a management table provided in the PDU assembling unit 124a of the receiver 120. The management table 900 includes a valid 901, an address 902, and a length 903 of each PDU 220.

The valid 901 indicates whether the PDU 220 has been correctly received. The initial value of the valid 901, for example, is "0". For example, the SDU assembling unit 124b writes, when receiving a PDU 220, "1" in the valid 901 of the row number corresponding to the SN of the PDU 220.

The address 902 is first address of the buffer where the PDU data 223 of the PDU 220 is stored. The length 903 indicates the length of the PDU data 223.

In the management table 900, neither information indicating re-segmentation has occurred, nor information associated with re-segmentatio.n and the subPDU is included. When sending the status information in reply to poll information sent from the transmitter 110, the receiver 120 can obtain necessary information by referring to the management table 900 alone, specifically, the valid 901 in the row number corresponding to the SN.

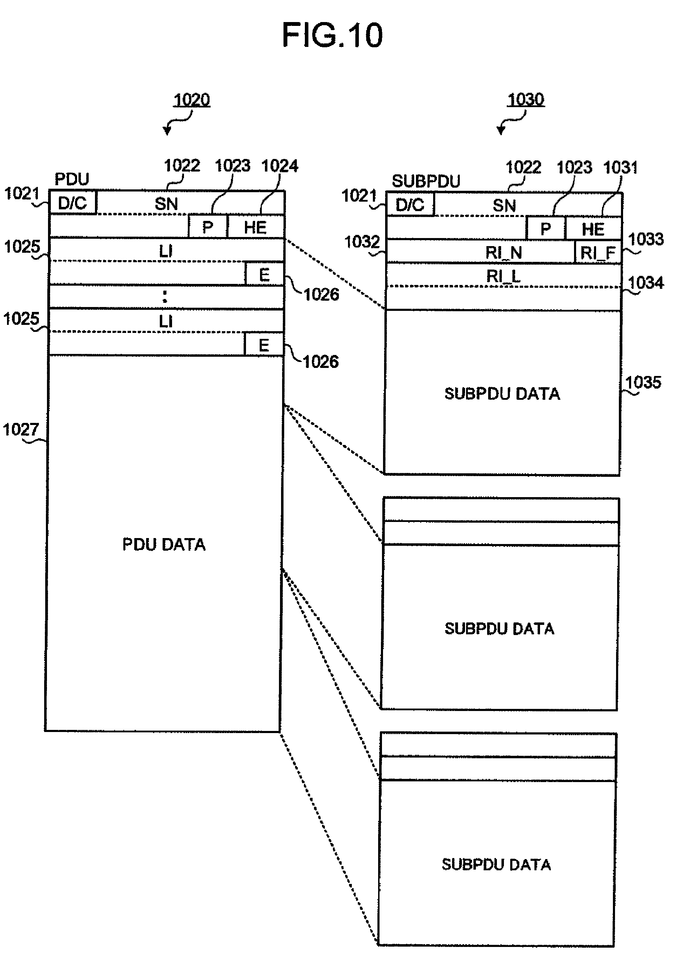

Fig. 10 is a schematic of a PDU format example of the communication system 100. In this example, the asynchronous mode data (AMD), which is the PDU of a conventional 3G system, is applied to the format of the PDU 220 according to the first embodiment.

A PDU 1020 is an example of the PDU 220 shown in Fig. 2, and subPDU 1030 is an example of the subPDU 230 shown in Fig. 2. The PDU 1020 includes a data/control (D/C) 1021, an SN 1022, a polling bit (P) 1023, a header extension type (HE) 1024, an LI 1025, an E 1026, and a PDU 1027.

The D/C 1021 is information that discriminates data PDU from control PDU, where PDU 1020 having D/C 1021, is data PDU. The SN 1022, as described in Fig. 2, is a sequence number between a limited range to identify a PDU 1020 among similar PDU 1020. The P 1023 is a bit used to inquire about the receiving condition on the receiver 120 side. The poll information shown in Fig. 3 uses and sends this bit.

The HE 1024 is information that indicates whether LI 1025 is included in the PDU 1020 and whether the PDU 1020 is a product of re-segmentation (corresponds to F 222 shown in Fig. 2). In the AMD PDU format of conventional 3G systems, HE is allocated two bits.

Among these two bits of the HE, the lowest bit (least significant bit (LSB)) indicates whether LI is included in the AMD PDU, and the highest bit (most significant bit (MSB)) is not used. Here, in the present embodiment, information indicating whether the PDU 1020 is a product of re-segmentation is allocated to the MSB of the HE 1024.

For example, when the value of the HE 1024 is "00", the HE 1024 indicates that the PDU 1020 is not a product of re-segmentation and does not include the LI 1025. When HE 1024 is "01", the HE 1024 indicates that the PDU 1020 is not a product of re-segmentation, but includes LI 1025. As the PDU 1020 is not a product of re-segmentation, the MSB value of the HE 1024 of the PDU 1020 is "0".

The LI 1025 is information indicating the location of a link boundary when the PDU 1020 includes plural segments of the SDU 210 that are linked. The LI 1025 is not present in the PDU 1020 when the PDU 1020 includes only one segment as no link boundary exists. The E 1026 appended at the end of the L1 1025 is information indicating whether what follows is L1 1025 or PDU data 1027.

For example, a "0" value of the E 1026 indicates that L1 1025 follows the E 1026. On the other hand, a value of "1" indicates that PDU data 1027 follows the E 1026. Here, when the LI 1025 follows the E 1026, the PDU includes three or more SDU 210 segments and therefore, there are two or more link boundaries.

The PDU data 1027 is a segment of a segmented SDU 210. Further, the PDU data 1027 may also be linked plural segments of the SDU 210. When the size of the SDU 210 segment is smaller than the size of the PDU data 1027, the excess portion of the PDU 1020 can be filled with padding, i.e., meaningless random data. LI 1025 that has a predefined value is appended to indicate the whether padding is present.

The subPDU 1030 includes the D/C 1021, the SN 1022, the P 1023, an HE 1031, an RI_N 1032, an RI_F 1033, an RI_L 1034, and the subPDU data 1035. The subPDU 1030 is formed by segmenting the PDU 1020 into three segments. Regarding the elements of the subPDU 1030 that are similar to the elements of the PDU 1020, the same reference numbers are given and description is herein omitted. The HE 1031 is information indicating whether the subPDU 1030 is a product of re-segmentation, and whether the subPDU 1030 is a subPDU 1030 whose division number has been changed.

The HE 1024 of the PDU 1020 includes information that indicates whether the PDU 1020 includes LI 1025. However, in the subPDU 1030, the LI 1025 and the PDU data 1027 are not handled separately, and the subPDU data 1035 of the subPDU 1030 does not include a boundary. Therefore, it is not necessary for the HE 1031 of the subPDU 1030 to include information that indicates whether LI is included.

As a result, in the present invention, information indicating whether the subPDU 1030 is a subPDU 1030 whose division number has been changed is allocated to the LSB of the HE 1031 of the subPDU 1030. In other words, for example, when the subPDU 1030 formed by initially segmenting the PDU 1020 into three segments is sent, the LSB value of the HE 1031 of the subPDU 1030 is "0". Afterwards, if the subPDU 1030 formed by segmenting the same PDU 1020 into six segments is sent, the LSB of the HE 1031 of the subPDU 1030 is usually "1".

Information indicating that the subPDU 1030 is a subPDU 1030 whose division number has been changed, informs the receiver 120 whether the subPDU 1030 is a product of re-segmentation or a product of a second re-segmentation. For example, in Fig. 3, the PDU#2-1 that results from re-segmenting the PDU#2 at step S307 and the PDU#2-1 that results from re-segmenting the PDU#2 again at step S314 are different subPDU, but have the same SN and RI_N, and therefore, can not be differentiated.

Therefore, information that indicates whether the subPDU 1030 is a subPDU 1030 whose division number has been changed is necessary. For example, when the PDU assembling unit 124a receives subPDUs 1030 that have identical SNs 1022, and different LSBs in the HE 1031, it is determined that the division number has been changed, and the previous subPDUs 1030 that have been stored in the buffer up to this point are discarded.

For example, when the value of HE 1031 is "10", the HE 1031 indicates that the subPDU 1030 is a product of re-segmentation and is a subPDU 1030 whose division number has not been changed. When the value of the HE 1031 is "11", the HE 1031 indicates that the subPDU 1030 is a product of re-segmentation and a subPDU 1030 whose division number has been changed. Since the subPDU 1030 is a product of re-segmentation, the MSB value of the HE 1031 of the subPDU 1030 is "1".

The RI_N 1032, as shown in Fig. 2, is information indicating a sequence number of a segment among the segments formed by segmenting the original PDU 1020. The RI_F 1033 is information indicating whether the segment is the last segment among the segments formed by segmenting the original PDU 1020. The RI_L 1034 is information indicating the size of the subPDU data 1035. The subPDU data 1035 is a segment formed by segmenting the block including the LI 1025 of the PDU 1020 and the PDU data 1027.

Therefore, by allocating information indicating whether the PDU is a product of a second re-segmentation to the MSB of the HE that is not used in the AMD PDU format of the 3G system, without increasing the AMD PDU format size, outer-ARQ function can be realized.

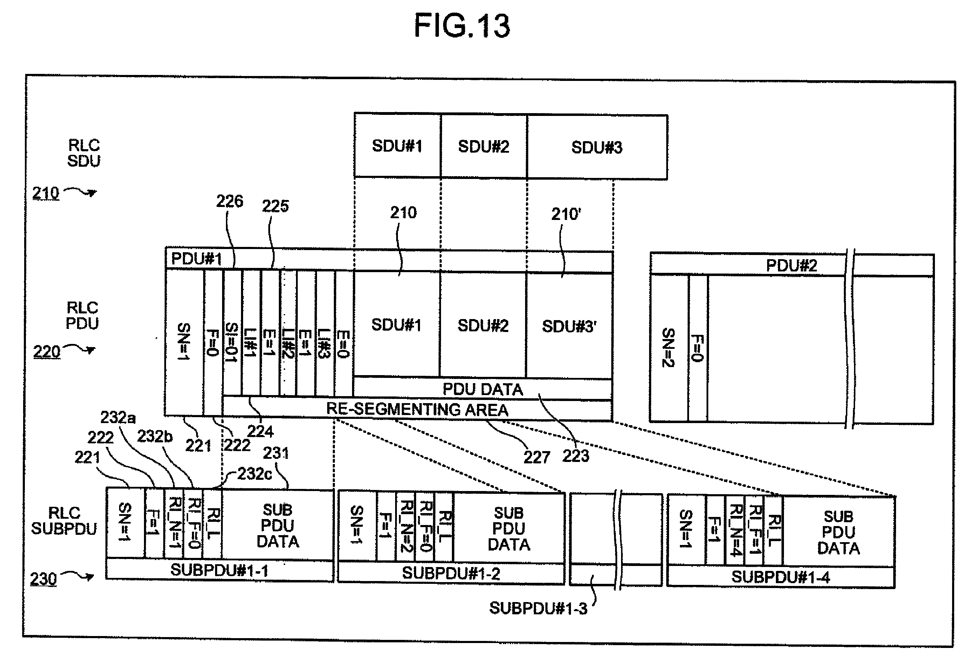

Fig. 13 is a schematic of a PDU and subPDU format of the communication system 100 according to the second embodiment. The SDU 210 is an SDU that is output from the upper layer 111. The PDU 220 is a PDU output from the SDU segmenting unit 113a. The subPDU 230 is a subPDU output from the PDU segmenting unit 113b.

Here, as the SDU 210, there are the SDU#1, the SDU#2, and the SDU#3. The SDU 210 includes data that is sent to and from a higher layer and header information required for sending and receiving control, this content has no relation to RLC layer processing.

Here, as the PDU, there are the PDU#1 and the PDU#2. The PDU 220 includes the SN 221, the F 222, the PDU data 223, the LI 224, an extension bit (E) 225, and an SI 226. The SN 221 is a sequence number between a limited range to identify a PDU 220 among sibling PDU 220. For example, values of the SN 221 of the PDU#1 and the PDU#2 are "1", and "2", respectively.

The F 222 is information indicating whether the PDU 220 is a product of re-segmentation. Here, as the PDU 220 is not a product of re-segmentation, the values of the F 222 of PDU#1, the PDU#2, and the PDU#3 are all "0", for example. Conversely, a value of the F 222 of a subPDU that results from re-segmentation of the PDU 220 is, for example, "1". By this information, the PDU assembling unit 124a of the receiver 120 can easily determine whether PDU or subPDU has been received from the MAC layer 122 and can perform a corresponding type of processing.

The PDU data 223 is a product of SDU 210 segmentation or linking. As the sizes of the both the SDU and the PDU can be varied, the PDU data 223 may be one entire SDU 210, one SDU segment 210', two or more of the SDUs 210 that are linked, or two or more of the SDU segments 210' that are linked. As shown in Fig. 13, the SDUs 210 and the SDUs segment 210' may be linked in a mixed form.

Here, the PDU data 223 of the PDU#1 is formed from the SDU#1, the SDU#2, and the SDU#3, where only a segment SDU#3' is linked, not the entire SDU#3.

The LI 224 is information indicating the length of the SDU included in the PDU data 223 and exists for each SDU. For example, LI#1 and LI#2 in the PDU#1 indicate the lengths of the SDU#1 and the SDU#2, respectively, while the LI#3 in the PDU#1 indicates the length of the segment SDU#3'.

E 225 is paired the LI 224 and indicates whether the LI 224 of another SDU 210 follows next. For example, if the PDU data 223 of the PDU#1 includes the SDU#1, the SDU#2, and the SDU#3, and only the E 225 corresponding to the last SDU#3 is not followed by the LI 224 (the PDU data 223 follows), this situation is indicated by, for example, "0". Whereas, the E 225 of the SDU#1 and the SDU#2 are each followed by the LI 224, indicated by, for example, "1".

The SI 226 is two-bit information, among which, for example, the MSB indicates that the first octet of the PDU data 223 is at the head of the SDU 210 by, for example, "0". On the contrary, for example, if the first octet of the PDU data 223 is in the middle of the SDU 210, i.e., the head of the SDU 210 has been segmented and is between the previous PDU 220, this situation is indicated by, for example, "1". Further, among the two-bit information of the SI 226, for example, the LSB indicates that the last octet of the PDU data 223 is at the end of the SDU 210 by, for example, "0" . On the contrary, for example, if the last octet of the PDU data 223 is in the middle of the SDU 210, i.e., the end of the SDU 210 has been segmented and is between the previous PDU 220, this situation is indicated by, for example, "1".

Here, as the subPDU 230, there are a PDU#1-1 to a PDU#1-4 resulting from segmentation of the PDU#1 into four segments. The subPDU 230 includes the SN 221, the F 222, a subPDU data 231, and RI 232. The SN 221 of the subPDU 230 is a. copy of the SN 221 of the original PDU 220 before segmentation. Here, as a value of the SN 221 of the PDU 220 before segmentation is "1", all of the SN values of the PDU#1-1 to the PDU#1-4 are "1".

The F 222 of the subPDU 230 is information having the same function as the F 222 of the PDU 220. However, as the subPDU 230 is formed by re-segmentation of the PDU 220, the values of the PDU#1-1 to the PDU#1-4 are, for example, all "1".

The subPDU data 231A is formed by segmenting a portion 227 of the PDU 220 by size corresponding to the division number. The portion 227 is the PDU 220 excluding the SN 221 and the F 222. In other words, the PDU segmenting unit 113b segments the SI 226, the LI 224, the E 225, and the PDU data 223 as one block, without discriminating each. Here, this block is referred to as a re-segmenting area 227.

By handling the SI, LI, E, and PDU data as one block without discrimination of each, and without regard to the quantity of the SDUs 210 included in the PDU 220 or whether the SDU segments 210' are included, this block can usually be segmented using the same method.

The RI 232 of the subPDU 230 is re-segmentation information concerning the subPDU data 231 and includes an RI_L, an RI_N, and an RI_F. The RI_L is information indicating the size of the subPDU data 231. The RI_N is information pertaining to the subPDU data 231 indicating a sequence number of a segment among segments that have been segmented from the original PDU 220. Here, the values of the RI_N of the PDU#1-1 to the PDU#1-4 are "1" to "4", respectively.

The RI_F is information indicating whether the subPDU data 231 is the last segment among segments segmented from the original PDU 220. Here, the last subPDU 230 among the PDU#1-1 to the PDU#1-4, is the PDU#1-4. Therefore, for example, the value of the RI_F of the PDU#1-1 is "1", and the values of the PDU#1-1 to the PDU#1-3 are all "0". The elements of the format may be expressed by other means and the sequence thereof is not limited to that described above.

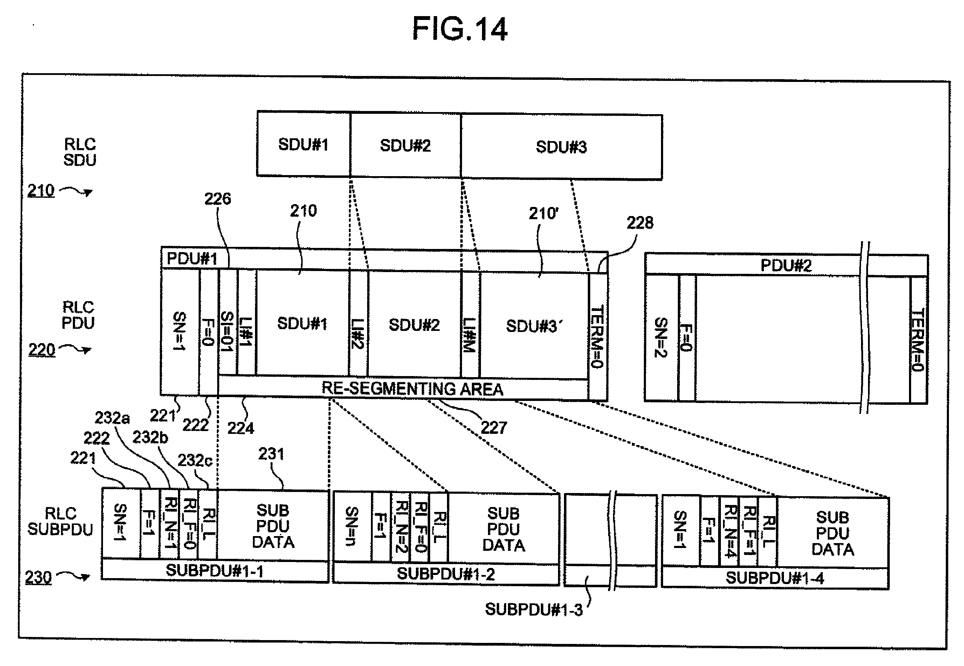

Fig. 14 is a schematic of a PDU and subPDU format of the communication system 100 according to the third embodiment. The SDU 210 is an SDU that is output from the upper layer 111. The PDU 220 is a PDU output from the SDU segmenting unit 113a. The subPDU 230 is a subPDU output from the PDU segmenting unit 113b.

Here, as the SDU 210, there are the SDU#1, the SDU#2, and the SDU#3. The SDU 210 includes data that is sent to and from a higher layer and header information required for sending and receiving control, this content has no relation to RLC layer processing.

Here, as the PDU, there are the PDU#1 and the PDU#2. The PDU 220 includes the SN 221, the F 222, the SDU 210 or the SDU segment 210', the LI 224, the SI 226, and a term 228. The SN 221 is a sequence number between a. limited range to identify a PDU 220 among sibling PDU 220. For example, values of the SN 221 of the PDU#1 and the PDU#2 are "1", and "2", respectively.

The F 222 is information indicating whether the PDU 220 is a product of re-segmentation. Here, as the PDU 220 is not a product of re-segmentation, the values of the F 222 of PDU#1, the PDU#2, and the PDU#3 are all "0", for example. Conversely, a value of the F 222 of a subPDU that results from re-segmentation of the PDU 220 is, for example, "1". By this information, the PDU assembling unit 124a of the receiver 120 can easily determine whether PDU or subPDU has been received from the MAC layer 122 and can perform a corresponding type of processing.

As the sizes of the both the SDU and the PDU can be varied, the PDU 220 may include one entire SDU 210, one SDU segment 210', two or more SDU 210 or SDU segments 210'. As shown in Fig. 14, the SDU 210 and the SDU segment 210' may be included in a mixed form.

Here, the PDU#1 is formed from the SDU#1, the SDU#2, and the SDU#3, where the only a segment SDU#3' is included, not the entire SDU#3.

The LI 224 is information indicating the length of the SDU included in the PDU 220 and exists for each SDU. For example, LI#1 and LI#2 in the PDU#1 indicate the lengths of the SDU#1 and the SDU#2, respectively, while the LI#3 in the PDU#1 indicates the length of the segment SDU#3'.

The SI 226 is two-bit information, among which, for example, the MSB indicates that the first octet of the first SDU area in the PDU 220 is at the head of the SDU 210 by, for example, "0". On the contrary, for example, if the first octet of the first SDU area in the PDU 220 is in the middle of the SDU 210, i.e., the head of the SDU 210 has been segmented and is between the previous PDU 220, this situation is indicated by, for example, "1". Further, among the two-bit information of the SI 226, for example, the LSB indicates that the last octet of the last SDU area in the PDU 220 is at the end of the SDU 210 by, for example, "0". On the contrary, for example, if the last octet of the last SDU area in the PDU 220 is in the middle of the SDU 210, i.e., the end of the SDU 210 has been segmented and is between the previous PDU 220, this situation is indicated by, for example, "1".

The term 228 is an area to indicate the end of the PDU 220 and has the same bit width as the LI 224, which is usually "0". In the device receiving the PDU 220, after the LI 224, the area whose length is indicated by the LI 224 is regarded as the SDU or the SDU segment. A value of "0" in the next area is taken to mean the end of the concerned PDU 220, while any number other than "0" is taken to be the LI 224.

Here, there are a PDU#1-1 to a PDU#1-4 as the subPDU 230 resulting from segmentation of the PDU#1 into four segments. The subPDU 230 includes the SN 221, the F 222, a subPDU data 231, and RI 232. The SN 221 of the subPDU 230 is a copy of the SN 221 of the concerned PDU 220 before segmentation. Here, as a value of the SN 221 of the PDU 220 before segmentation is "1", all of the SN values of the PDU#1-1 to the PDU#1-4 are "1".

The F 222 of the subPDU 230 is information having the same function as the F 222 of the PDU 220. However, as the subPDU 230 is formed by re-segmentation of the PDU 220, the values of the PDU#1-1 to the PDU#1-4 are, for example, all "1".

The subPDU data 231A is formed by segmenting a portion 227 of the subPDU data 231 by size corresponding to the division number. The portion 227 is the PDU 220 excluding the SN 221, the F 222, and the term 227. In other words, the PDU segmenting unit 113b segments the SI 226, the LI 224, and the SDU 210 or the SDU segment 210' as one block, without discriminating each. Here, this block, i.e., portion, is referred to as a re-segmenting area 227.

By handling the SI, LI, and the SDU or the SDU segment as one block without discrimination of each, and without regard to the quantity of the SDU 210 included in the PDU 220 or whether the SDU segment 210' are included, this block can usually be segmented using the same method.

The RI 232 of the subPDU 230 is re-segmentation information concerning the subPDU data 231 and includes an RI_L, an RI_N, and an RI_F. The RI_L is information indicating the size of the subPDU data 231. The RI_N is information pertaining to the subPDU data 231 indicating a sequence number of a segment among segments that have been segmented from the original PDU 220. Here, the values of the RI_N of the PDU#1-1 to the PDU#1-4 are "1" to "4", respectively.

The RI_F is information indicating whether the subPDU data 231 is the last segment among segments segmented from the original PDU 220. Here, the last subPDU 230 among the PDU#1-1 to the PDU#1-4, is the PDU#1-4. Therefore, for example, the value of the RI_F of the PDU#1-4 is "1", and the values of the PDU#1-1 to the PDU#1-3 are all "0". The elements of the format may be expressed by other means and the sequence thereof is not limited to that described above.

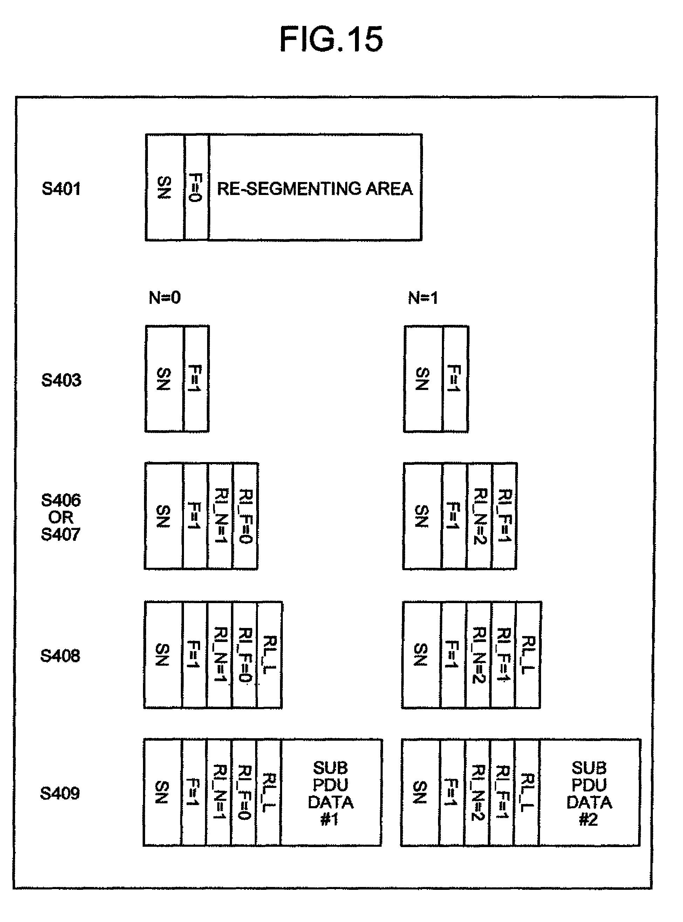

Re-segmentation processing performed by the PDU segmenting unit 113b of the communication device 110 according to the second embodiment is described with reference to Fig. 4 and Fig. 15. Fig. 15 is a schematic of a process of forming the subPDU 230 for reference with Fig. 4.

Here in this example, the size of the re-segmenting area 227 of the PDU 220 output from the SDU segmenting unit 113a is 200 octets, where the PDU segmenting unit 113b segments the PDU 220 into two subPDU 230. In other words, the PDU segmenting unit 113b re-segments the re-segmenting area 227 into two subPDU 230 having 100 octets each.

A variable n indicates a sequence number of a subPDU 230 being formed among the subPDUs 230 formed from the original PDU 220. As described for Fig. 2, in this example, the value of n of the first subPDU 230 is set to "0". Here, as the PDU 220 is segmented into 2, when n is "0", the subPDU 230 being formed is the first subPDU 230. Further, when n is "1", the subPDU 230 being formed is the last subPDU 230.

The PDU 220 output from the SDU segmenting unit 113a is stored in the buffer (not shown) of the transmitter 110 (step S401) (refer to Fig. 15). "0" is substituted for the variable n (step S402). In other words, the subPDU 230 being formed is set as the first subPDU 230.

The buffer addresses from "0" to "1" are read (step S403) (refer to Fig. 15). In other words, the SN 221 and the F 222 of the original PDU 220 are read. The value of the F 222 is changed from "0" to "1" (step S404) (refer to Fig. 15), i.e., information indicating that the subPDU 230 being formed is a product of re-segmentation is appended.

It is determined whether the value of the variable n is "1" (step S405), i.e., whether the subPDU 230 being formed is the last subPDU 230. When the variable n is "1" (step S405: YES), RI_F (value: 1) and RI_N (value: n) are appended to the subPDU 230 being formed (step S406) (refer to Fig. 15), i.e., information indicating that the subPDU 230 being formed is the last subPDU 230 and a respective sequence number (here, n=1) are appended.

At step S405, when the value of variable n is "0" (step S405: NO), RI_F (value: 0) and RI_N (value: n) are added to the subPDU 230 being formed (step S407) (refer to Fig. 15), i.e., information indicating that the subPDU 230 being formed is not the last subPDU 230 and a respective sequence number (here, n=0) are appended.

RI_L (value: 100) is appended to the subPDU 230 being formed (step S408) (refer to Fig. 15), i.e., information is appended indicating that the size of the segment of the original PDU 220 for the subPDU 230 being formed is 100 octets. Buffer addresses from "2+100*n" to "2+100*(n+1)-1" are read (step S409) (refer to Fig. 15). In other words, 100-octet segments of the re-segmenting area 227 of the original PDU 220 are read as the subPDU data 231 of the subPDU 230 being formed.

The subPDU 230 formed from the SN 221, the F 222, the RI_N, the RI_F, the RI_L, and the subPDU data 231 is output to the MAC layer 114 (step S410), and it is determined whether the value of the variable n is "1" (step S411). In other words, at step S411, it is determined whether the subPDU 230 output is the last subPDU 230. When the value of the variable n is "0" (step S411: NO), "1" is added to the value of the variable n (step S412), the process returns to step S403. When the value of the variable n is "1" (step S411: YES), a series of processing ends.

In this way, without discriminating the SI 226, the LI 224, the E 225, and the PDU data 223 of the PDU 220, by handling both as one block, even when a PDU 220 including linked plural SDUs 210 or SDU segments 210' is re-segmented, it is not necessary to determine in which subPDU a link boundary of the SDU is to be included after the re-segmentation or to recalculate the LI value 224.

As the re-segmentation process for the PDU 220 having the format shown in Fig. 13 is not dependent on the format of the re-segmenting area 227, the re-segmentation process for the PDU 220 having the format shown in Fig. 14 according to the third embodiment is substantially the same.

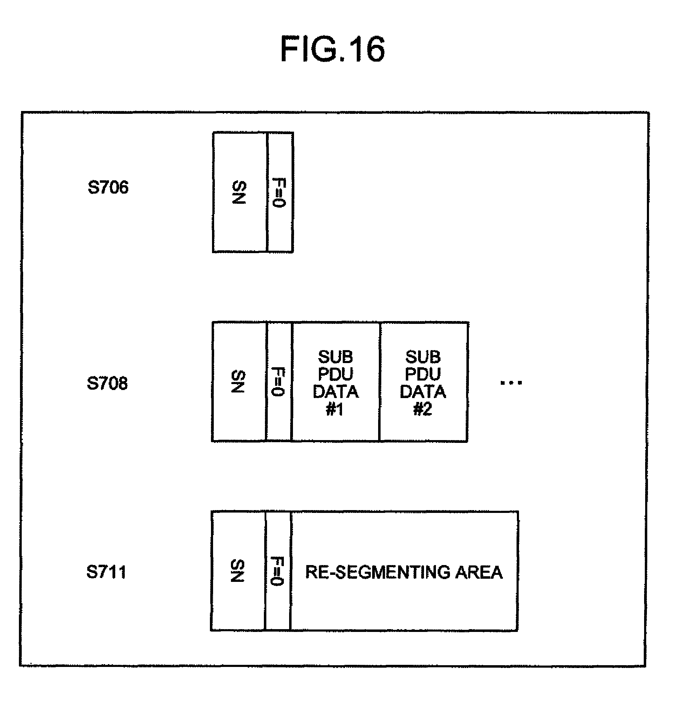

Here, a second PDU assembly process performed by the PDU assembling unit 124a of the receiver 120 according to the second embodiment is described with reference to Fig. 7 and Fig. 16. Fig. 16 is a schematic of a process of assembling the PDU for reference with Fig. 7. The variable n is a variable indicating a sequence number of the subPDU 230 being read among the subPDUs 230 formed by segmenting the original PDU 220.

It is waited until the subPDU 230 is input from the MAC layer 122 (step S701: NO, loop). Upon input of the subPDU 230 (step S701: YES), the input subPDU 230 is stored in the buffer, and the management tables 610 and 620 are updated (step S702).

The management table 610 is read (step S703). It is then determined whether all of the values of the valid 614 in the management table 610 are "1" (step S704), i.e., whether all of the subPDU 230 corresponding to the PDU 220 being formed have been received. "0" is substituted for the variable n (step S705), i.e., the subPDU 230 to be read is set as the first subPDU 230.

The SN 611 is read from the management table 610 (step S706) (refer to Fig. 16), and the address 621 and the length 622 corresponding to the subPDU 230 being read are read from the management table 620 (step S707). Buffer addresses from "address" to "address+length-1" are read (step S708) (refer to Fig. 16). In other words, the subPDU data 231 of the subPDU 230 is read from the buffer based on the address 621 and the length 622 read at step S707.

It is determined whether the value of the variable n is equal to the final 613 (step S709), i.e., whether the subPDU 230 being formed is the last subPDU 230 among the subPDUs 230 formed by segmenting the original PDU 220. When the value of the variable n is not equal to the final 613 (step S709: NO), "1" is added to the variable n (step S710), the process returns to step S707. When the value of the variable n is equal to the final 613 (step S709: YES), the formed PDU 220 is output to the SDU assembling unit 124b (step S711), and a series of processing ends.

As the assembly process for the PDU 220 having the format shown in Fig. 13 is not dependent on the format of the re-segmenting area 227, the assembly process for the PDU 220 having the format shown in Fig. 14 according to the third embodiment is substantially the same with the exception that when a PDU 220 having the format shown in Fig.14 is assembled, after the last subPDU is linked, it is necessary to append the term 228, which is a fixed value (0).

As described above, the SDU segmenting unit and the PDU segmenting unit of the transmitter are provided as independent layers, when PDU re-segmentation is not performed, processing to form the PDU is simple.

When the transmitter re-segments the PDU, by segmenting the LI and the PDU data in the PDU as a block without discriminating each, it is not necessary to determine in which subPDU a link boundary of the SDU is to be included after the re-segmentation, and to recalculate the LI value and add the LI value to the concerned subPDU.

By providing the SDU assembling unit and the PDU assembling unit of the receiver as independent layers, when PDU re-segmentation is not performed by the transmitter, SDU assembly at the receiver is simple.

Further, when the receiver sends a resend request, only the PDU sequence number needs to be reported, i.e., there is no need to report the sequence of the subPDU. Therefore, the volume of control information required for resend requests is reduced.

As described above, a majority of transmission errors can be corrected by HARQ. Therefore, it is not necessary to configure a communication system capable of re-segmenting all of the PDU. For example, by providing a limit to the number of PDU that can be simultaneously re-segmented, a requisite minimum may be place on the configuration of the management table and such.

The transmission method or receiving method explained in each of the present embodiments can be implemented by a computer such as a personal computer and a workstation executing a program that is prepared in advance. This program is recorded on a computer-readable recording medium such as a hard disk, a flexible disk, a CD-ROM, an MO, and a DVD, and is executed by being read out from the recording medium by a computer. This program can be a transmission medium that can be distributed through a network such as the Internet.

According to the embodiments of the present invention, without complicated PDU resending processing, increasing the volume of control information necessary for resending PDU, or complicated restoring processing, not only can a function of packet re-segmentation be configured, but packet re-segmentation processing and restoring processing of the re-segmented packet can be simplified.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A communication method, comprising:
re-transmitting, from a transmitter to a receiver, a particular packet or a plurality of packet segments formed by segmenting the particular packet, when the transmitter receives a re-transmission request from the receiver, wherein
the particular packet includes identification information and information indicating that the particular packet is not segmented, and
each of the packet segments includes the identification information, information indicating that the particular packet is segmented, and information for assembling the particular packet.

2. The communication method according to claim 1, wherein whether the particular packet is re-transmitted or the packet segments are re-transmitted is determined based on transmission conditions.

3. The communication method according to claim 2, wherein a quantity of the packet segments is changed based on the transmission conditions.

4. A method of transmitting a packet from a transmitter to a receiver, comprising:
forming, at a first layer, a first packet by segmenting or integrating information output from an upper layer than the first layer;
forming, at a second layer, a plurality of second packets by segmenting the first packet; and
re-transmitting the first packet or the second packets from the transmitter to the receiver when the transmitter receives a re-transmission request from the receiver.

5. The method according to claim 4, wherein each of the first packet and the second packets include, identification information and information indicating whether the first packet is segmented, and information for assembling the first packet.

6. The method according to claim 5, wherein whether the first packet is re-transmitted or the second packets are re-transmitted is determined based on transmission conditions.

7. The method according to claim 6, wherein a quantity of the second packets is changed based on the transmission conditions.

8. A transmitter (110), comprising:
a re-transmitting unit (115c) that re-transmits, to a receiver (120), a particular packet or a plurality of packet segments formed by segmenting the particular packet, when receiving a re-transmission request from the receiver (120), wherein
the particular packet includes identification information and information indicating that the particular packet is not segmented, and
each of the packet segments includes the identification information, information indicating that the particular packet is segmented, and information for assembling the particular packet.

9. The transmitter (110) according to claim 8, wherein whether the particular packet is re-transmitted or the packet segments are re-transmitted is determined based on transmission conditions.

10. The transmitter (110) according to claim 9, wherein a quantity of the packet segments is changed based on the transmission conditions.

11. A receiver (120) that receives a particular packet or a plurality of packet segments from a transmitter (110), wherein the particular packet includes first information on identification and second information indicating that the particular packet is not segmented, and each of the packet segments includes the first information, third information indicating that the particular packet is segmented, and fourth information for assembling the particular packet, the receiver (120) comprising:
an assembling unit (124a) that assembles the particular packet based on the fourth information.

12. The receiver (120) according to claim 11, further comprising a requesting unit (124b) that requests re-transmission of the particular packet or the packet segments based on transmission conditions.

13. The receiver (120) according to claims 11 or 12, wherein
the packet segments further includes fifth information indicating that a quantity of the packet segments has been changed, and
the assembling unit (124a) assembles the particular packet based on the fifth information.

14. The receiver (120) according to any one of claims 11. to 13, wherein the assembling unit (124a) assembles the particular packet having an identical identification number.

15. The receiver (120) according to claims 13 or 14, wherein the packet segments that are received before the re-transmission and include identification number identical to the packet segments having the fifth information are discarded.
